# EUROPEAN PATENT APPLICATION

(11) **EP 4 837 868 A1**
(43) Date of publication of application: **11.11.2026**
(21) Application number: 26176155.5
(22) Date of filing: 04.05.2026
(51) Int. Cl.: B65H 3/08, B21D 43/24, B23Q 7/10, B25J 15/06, B65G 47/91, B65G 59/04, B65H 1/04, B65H 3/48, B65H 3/54

(54) **METAL SHEETS PICKUP DEVICE AND CORRESPONDING AUTOMATIC SYSTEM FOR STORING AND HANDLING STACKS OF METAL SHEETS TO BE PROCESSED**

(30) Priority: 06.05.2025 IT 202500010041
(71) Applicant: ADIGE-SYS S.P.A., 38056 Levico Terme (TN) (IT)
(72) Inventor: SARTORELLO, Devis, 31027 Lovadina di Spresiano TV (IT); ZANUSO, Claudio, 31050 Fanzolo di Vedelago TV (IT)
(74) Representative: Concone, Emanuele

(57) **Abstract**

A metal sheets pickup device comprises a plurality of fixed suction cups (5, 5', 5") mounted on a frame (12) and at least one corner suction cup (8) mounted on a swing arm (9) pivoted to the frame (12) via a horizontal fulcrum, an actuator (13) being pivoted on the frame (12) in a position between the corner suction cup (8) and the horizontal fulcrum so as to act on the swing arm (9) to rotate it upwards, said pickup device comprising at least one vertical pusher (14) disposed on the frame (12) between the corner suction cup (8) and the fixed suction cup (5') nearest thereto or the fixed suction cup (5") second nearest thereto, said vertical pusher (14) being configured to extend until it comes into contact with the metal sheet when the swing arm (9) is rotated upwards.

## Description

### Technical Field of the Invention

The present invention relates to a system for handling metal sheets arranged in stacks placed on trays stored in a tower frame, with an elevator that carries the trays to a loading station where the metal sheets are picked up one at a time for transfer to a machine for their processing (e.g., laser cutting machine, punching machine, etc.), and in particular an improved device for picking up only the top metal sheet from the stack.

### State of the Art

An example of the aforementioned type of system is illustrated in US 6152682 and also in the PCT application No. WO 2025/191443 filed by the same applicant, which shows a tower frame in which the first metal sheet in the stack is picked up by a set of suction cups, then the tray from which the metal sheet was picked up is brought back by the elevator, and the picked-up metal sheet is lowered onto the processing station, if it is integrated into the tower itself, or onto a cart that carries it to the processing station, if the station is adjacent to the tower. It is obvious that for proper metal sheet processing it is essential that the pickup device picks up only the top metal sheet of the stack, because the processing station cannot operate on two or more overlapping metal sheets. Furthermore, in general, metal sheet processing systems are designed to process each metal sheet individually.

This prior art suction cup device works well with heavy metal sheets that separate easily due to gravity, but may be inadequate for lightweight metal sheets and/or those with an oily surface layer that causes them to stick together, and/or highly polished metal sheets that exhibit significant adhesion to one another, making it difficult to separate only the top metal sheet from the stack, since the metal sheets often remain stuck together. To facilitate the separation of the metal sheets, several solutions are already known that utilize various principles, sometimes in combination with one another.

There are mechanical solutions in which the edge of the metal sheet being lifted is passed over a vertical serrated edge or a stiff-bristled brush designed to wedge itself between the two stuck metal sheets, thereby holding in place as much as possible the underlying metal sheet, i.e. the one being separated from the metal sheet lifted by the suction cups. Such a solution, however, does not guarantee separation and also requires periodic replacement of the serrated edge/brush, which wears out due to the repeated scraping of the metal sheets against it.

Another mechanical solution involves the use of an auxiliary suction cup mounted on a swing arm and positioned at a corner of the metal sheet. By starting the lifting process first in this area using the corner suction cup, rather than across the entire surface of the metal sheet, the weight of the stack of metal sheets should facilitate the initial separation, sometimes aided by a jet of air directed beneath the raised corner. Although this solution is more effective than the previous one and does not involve wear issues, even in this case there is no guarantee of separation, especially for lighter metal sheets.

DE 3226940 describes a device for individually lifting printed circuit boards, comprising a pair of rocker arms that carry between them a rotating shaft bearing a row of suction cups alternating with circular sectors. An actuator pivoted between the device frame and the pair of rocker arms presses the suction cups against the edge of the first board after adjusting the position of the circular sectors by temporarily releasing a locking arm, which also pivots between the device frame and the pair of rocker arms. To lift the first board and separate it from the second board, the edge of the board is bent along the circular sectors by moving the rotating shaft backwards along a groove in the rocker arms via a pair of rack-and-pinion mechanisms synchronized through a cross shaft and driven by two respective lateral actuators. Such a configuration of the device presents significant structural complexity, with associated cost and reliability issues, and involves a considerable deformation of the board by the circular sectors, which can cause problems with more delicate metal sheets.

The use of suction cups is also found in other similar fields; for example, JP 2024144165 describes a device for removing a protective film from a resin plate used in a fuel cell, EP 0479782 and WO 03/004387 describe devices for removing a first sheet of porous and flexible material (paper, cardboard) from a stack, while US 2006/043747 describes a device for picking up elements with areas of varying thickness and angled surfaces. All of these devices involve complex systems for mounting and moving suction cups in various directions (horizontal, vertical, rotation) and/or a substantial deformation of the element to be picked up, which is not applicable to the metal sheets mentioned in this application.

A different solution, however applicable only to metal sheets of ferromagnetic material, is to use magnets to polarize the metal sheets so as to create a magnetic repulsion between two adjacent metal sheets of opposite polarity. This repulsive force is not always sufficient to ensure separation and, in any case, cannot be generated on metal sheets of non-magnetic materials such as aluminum or stainless steel.

Finally, the surest method is to insert spacers between the metal sheets, but although this is a very effective method, it is rarely used because it is too costly in terms of both expense and labor, as well as the overall volume occupied by the stack of metal sheets.

### Summary of the Invention

The purpose of this invention is therefore to provide a metal sheets pickup device that overcomes these drawbacks. This objective is achieved by a device based on the corner suction cup solution but with the addition of at least one pusher positioned between it and the nearest suction cup, such that during the initial lifting phase the pusher repeatedly causes localized deformation of the top metal sheet sufficient to ensure separation from the metal sheet beneath it in the stack. Other advantageous features of the present device are specified in the dependent claims.

The main advantage of the device according to the present invention is that it retains the positive characteristics of the known solution with the corner suction cup while achieving greater effectiveness.

A further advantage of this device is that it ensures better performance with only a limited increase in the device's complexity, making it only marginally more expensive than the less effective known device.

### Brief Description of the Figures

These and other advantages and features of the device according to the present invention will be apparent to those skilled in the art from the following detailed description of some of its embodiments with reference to the accompanying drawings, in which:
Fig. 1 is a partial perspective view of the device placed in a system for handling metal sheets stacks as mentioned above;
Fig. 2 is a top plan view of the device with a metal sheet picked up from the stack;
Fig. 3 is a top perspective view of the portion of the device comprising the corner suction cup;
Fig. 4 is a partial front view of the portion of the device shown in Fig. 3;
Fig. 5 is a simplified partial side view of the portion of the device shown in Fig. 3;
Fig. 6 is a view similar to Fig. 5 but with the pusher extracted and the corner suction cup raised;
Fig. 7 is a front view similar to Fig. 5; and
Fig. 8 is a front view similar to Fig. 6.

### Detailed Description

Referring to these figures, it can be seen that an automatic system according to the invention traditionally comprises a tower frame in which uprights 1 carry a plurality of inverted L-shaped supports 2 arranged vertically one above the other at regular intervals. A plurality of trays 3 rests on said supports 2 via inverted L-shaped lateral rests 4 facing outward, such that the horizontal sections of said rests 4 are superimposed on the horizontal sections of supports 2.

When a tray 3 is taken by the elevator to the operational level of the tower where the metal sheets loading station is located, a metal sheets pickup device consisting of a plurality of fixed suction cups 5 picks up the top metal sheet from the stack 6; then tray 3 is brought back by the elevator, and the picked-up metal sheet is lowered to take it to the processing station.

Each suction cup 5 is connected to a vacuum circuit via a first tube 7 and to a blowing circuit via a second tube 7', these tubes being shown in the figures only with their end portions for clarity of the drawing. The operation of the device is well known, with the vacuum serving to grip the metal sheet and the blowing to release it.

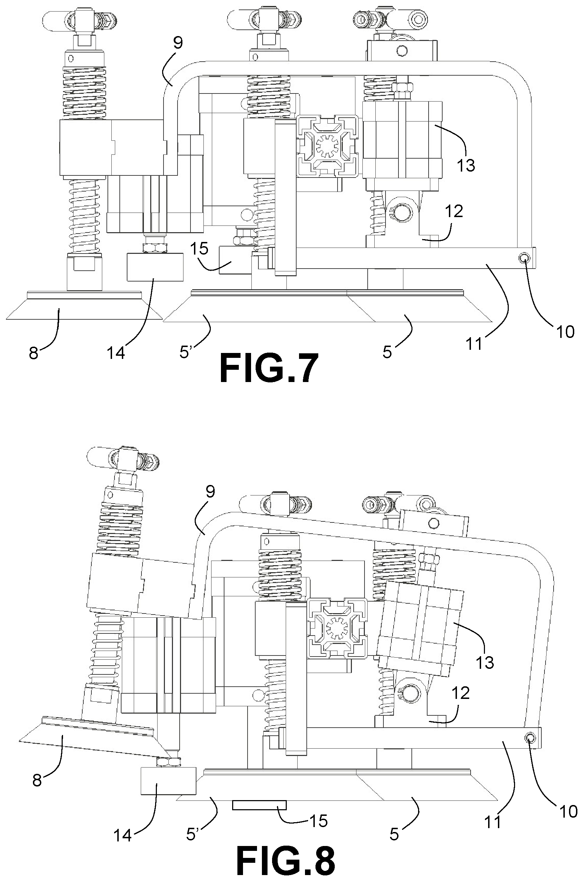

The pickup device traditionally also includes a corner suction cup 8 mounted on a swing arm 9, pivoted via a horizontal fulcrum 10 to a support bracket 11 that is part of the frame 12 carrying the fixed suction cups 5. An actuator 13, typically a pneumatic cylinder, is pivoted on frame 12 in a position between the corner suction cup 8 and the horizontal fulcrum 10 so as to act on arm 9 to rotate it upwards, as shown in Figures 7 and 8.

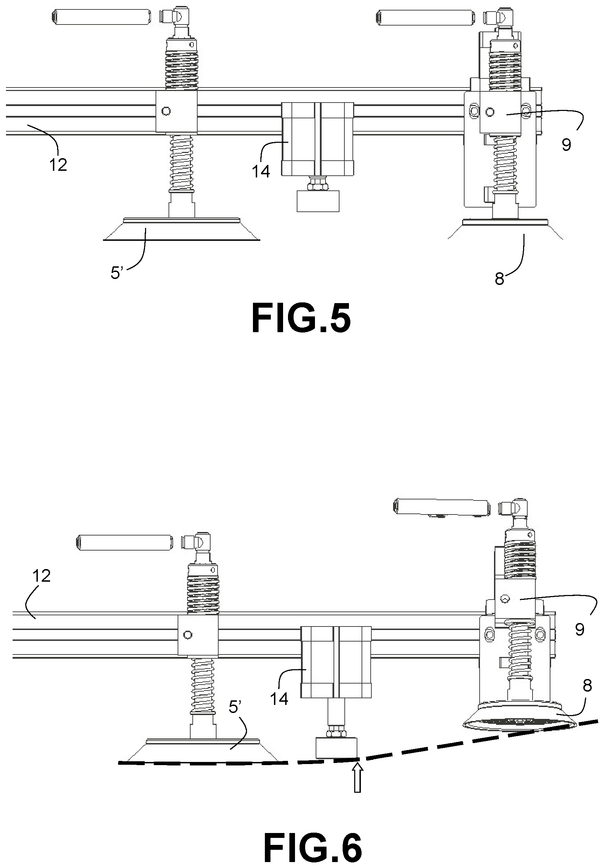

As mentioned above, the innovative aspect of the device according to the invention is the addition of at least one vertical pusher 14, preferably positioned between the corner suction cup 8 and the fixed suction cup 5' nearest thereto, typically in a position closer to the fixed suction cup 5' as shown in Figures 5 and 6. Although this is the preferred position for pusher 14, it could also be closer to the corner suction cup 8 or have an adjustable position between the two suction cups 5' and 8 depending on the type of metal sheet being processed.

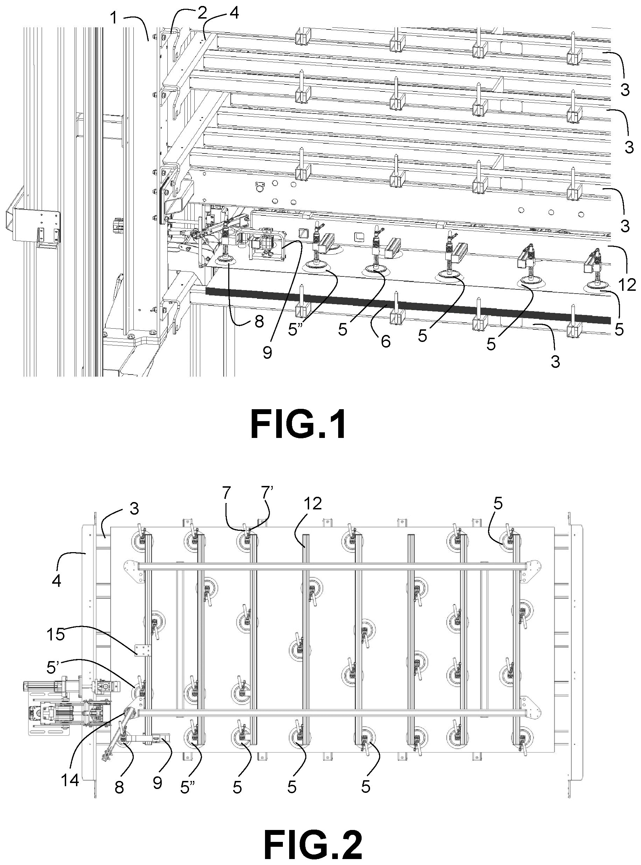

Alternatively, pusher 14 could be positioned between the corner suction cup 8 and the second nearest fixed suction cup 5", or two pushers 14 could be provided, arranged respectively between the corner suction cup 8 and the two fixed suction cups 5' and 5". A further embodiment also includes at least one auxiliary pusher 15 positioned between suction cup 5' and the fixed suction cup 5 adjacent thereto, as shown in Figures 2-4, or positioned between suction cup 5" and the fixed suction cup 5 adjacent thereto. This auxiliary pusher 15 may have a longer stroke than pusher 14, extending as far as below the suction cups' pickup plane, as shown in Fig. 8.

The pushers 14, 15 are preferably pneumatic cylinders, typically equipped with a pressure regulator set from 1 to 6 bar to avoid applying excessive force to the thin metal sheets, which may become overly marked when the pusher acts upon them. In particular, as indicated by the arrow in Fig. 6, pusher 14 causes a marked bending of the metal sheet picked up by the suction cups 5, thereby facilitating the detachment of any additional metal sheet that may be stuck underneath it.

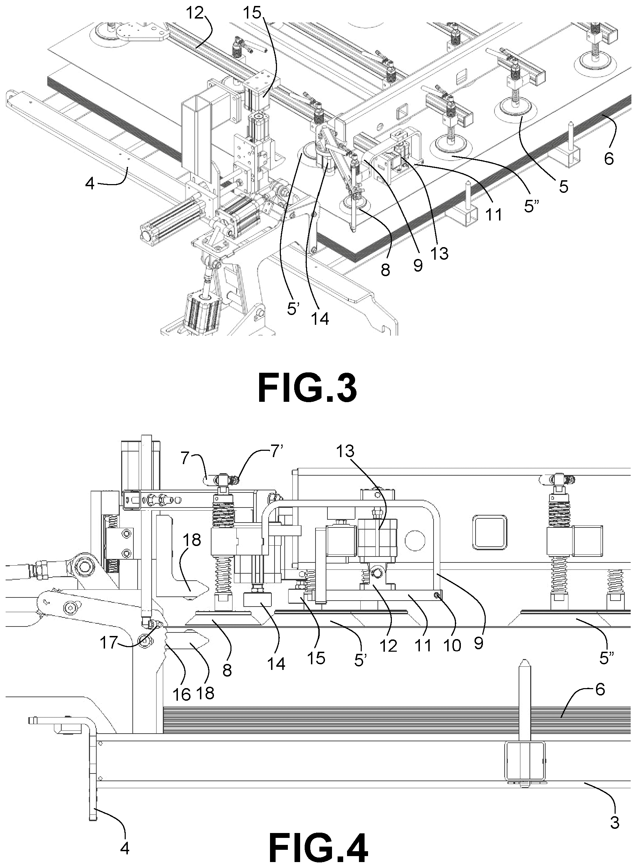

As in prior art devices, detachment can be further facilitated by the action of a vertical serrated edge 16 and/or an air jet emitted from a corner nozzle 17, and the presence of a single metal sheet is verified by a thickness gauge 18 before transferring it to the processing station (Fig. 4).

The action of pusher 14 may be repeated several times during the lifting of the metal sheet and, in a preferred embodiment, pusher 14 and actuator 13 are fed through the same valve for simplicity of construction, so that pusher 14 extends when the suction cup 8 rises and, conversely, the suction cup 8 descends when pusher 14 retracts. Of course, it is possible to use two separate controls so that the aforementioned elements are operated independently, whereby the suction cup 8 could remain raised throughout the lifting of the metal sheet while pusher 14 is repeatedly extended and retracted.

It is clear that the embodiment of the device according to the invention described and illustrated above is only an example subject to numerous variations. In particular, the exact number, shape, and arrangement of the suction cups and pushers may be varied according to specific construction requirements as long as the general structure described above is maintained.

Furthermore, the embodiments described above relate to a device integrated into a system that operates on metal sheets of variable dimensions, so the different metal sheet sizes share only the corner where the corner suction cup 8 is located. However, if the processed metal sheets have at least one side of fixed dimensions, then the different formats will have two corners in common; therefore, the device could have a similar configuration of the corner suction cup 8 and pushers 14, 15 at the second of these common corners as well.

## Claims

1. A metal sheet pickup device comprising a plurality of fixed suction cups (5, 5', 5") mounted on a frame (12), each of said suction cups (5, 5', 5") being connected to a vacuum circuit via a first tube (7) and to a blowing circuit via a second tube (7'), and at least one corner suction cup (8) mounted on a swing arm (9) pivoted to said frame (12) via a horizontal fulcrum (10), an actuator (13) being pivoted to the frame (12) at a position between said corner suction cup (8) and said horizontal fulcrum (10) so as to act on said swing arm (9) to rotate it upwards, said pickup device being **characterized by** comprising at least one vertical pusher (14) disposed on the frame (12) between the corner suction cup (8) and the fixed suction cup (5') nearest thereto or the fixed suction cup (5") second nearest thereto, said vertical pusher (14) being configured to extend to contact the metal sheet when the swing arm (9) is rotated upwards.

2. A device according to claim 1, **characterized in that** it comprises a first vertical pusher (14) disposed on the frame (12) between the corner suction cup (8) and the fixed suction cup (5') nearest thereto, and a second vertical pusher (14) disposed on the frame (12) between the corner suction cup (8) and the fixed suction cup (5") second nearest thereto.

3. A device according to any of the preceding claims, **characterized in that** all the actuators (14) present are pneumatic cylinders fed through a pressure regulator, preferably with a feeding pressure between 1 and 6 bar.

4. A device according to the preceding claim, **characterized in that** the actuator (13) of the swing arm (9) is a pneumatic cylinder fed through a valve that is in common with at least one of the pushers (14).

5. A device according to any of the preceding claims, **characterized in that** at least one of the pushers (14) is arranged on the frame (12) such that its position is adjustable.

6. A device according to any of the preceding claims, **characterized in that** a similar configuration of corner suction cup (8) and pushers (14) is also present on a second adjacent corner of the frame (12).

7. A device according to any of the preceding claims, **characterized in that** it comprises at least one auxiliary pusher (15) disposed on the frame (12) between a fixed suction cup (5) and the fixed suction cup (5') nearest to the corner suction cup (8) or the fixed suction cup (5") second nearest to the corner suction cup (8).

8. A device according to the preceding claim, **characterized in that** the at least one auxiliary pusher (15) is configured to extend to below the picking plane of the fixed suction cups (5, 5', 5").

9. A device according to one of claims 7 or 8, **characterized in that** all of the pushers (14, 15) present are pneumatic cylinders fed through a pressure regulator, preferably with a feeding pressure between 1 and 6 bar.

10. A device according to the preceding claim, **characterized in that** the actuator (13) of the swing arm (9) is a pneumatic cylinder fed through a valve that is in common with at least one of the pushers (14, 15).

11. A device according to any of claims 7 to 10, **characterized in that** at least one of the pushers (14, 15) is arranged on the frame (12) such that its position is adjustable.

12. A device according to any of claims 7 to 11, **characterized in that** a similar configuration of corner suction cups (8) and pushers (14, 15) is also present on a second adjacent corner of the frame (12).

13. An automatic system for storing and handling groups of metal sheets to be processed, comprising a plurality of trays (3) provided with side rests (4) and carrying said metal sheets arranged in stacks (6), a tower frame provided with uprights (1) and horizontal supports (2) suitable for supporting said side rests (4) so as to define a plurality of vertically-stacked storage stations for storing said trays (3), and an elevator moving vertically between said storage stations and an operational level of the tower frame where a metal sheets loading station is located, **characterized in that** said loading station comprises a device according to any of the preceding claims for picking up the first metal sheet of a stack (6) of metal sheets.
